# EUROPEAN PATENT APPLICATION

(11) **EP 2 549 772 A2**
(43) Date of publication of application: **23.01.2013**
(21) Application number: 12155115.4
(22) Date of filing: 13.02.2012
(51) Int. Cl.: H04N 21/6587, H04N 21/433, H04N 21/432, H04N 21/472

(54) **Electronic apparatus and playback control method**

(30) Priority: 22.07.2011 JP 2011160807
(71) Applicant: Kabushiki Kaisha Toshiba, Tokyo 105-8001 (JP)
(72) Inventor: Ohashi, Jun, Tokyo, 105-8001 (JP)
(74) Representative: Henkel, Breuer & Partner

(57) **Abstract**

According to one embodiment, an electronic apparatus (10) starts, when a playback position has been changed to a first data position in the multimedia content data, which has not yet been stored in the buffer (401), a first buffering process for successively receiving data parts, which follow the first data position in the multimedia content data, from a server (21), and storing the data parts in the buffer (401). The apparatus (10) skips, when an audio data part in the multimedia content data, which is not stored in the buffer (401), has been requested, execution of a second buffering process for receiving the requested audio data part from the server (21) and storing the audio data part in the buffer (401).

## Description

Embodiments described herein relate generally to an electronic apparatus which is capable of playing back content data, and a playback control method.

In recent years, various kinds of electronic apparatuses, such as a personal computer, a PDA and a smartphone, have been developed. Most of these kinds of electronic apparatuses have a streaming playback function of playing back multimedia content data, while receiving the multimedia content data via the Internet.

In the streaming playback of multimedia content data, a part of the multimedia content data, which is received from a content server, is stored in a stream buffer in the electronic apparatus.

Player software, which is executed on the electronic apparatus, displays a user interface which is called "seek bar" (or "progressive bar"). The user can change the playback position within the multimedia content data by operating the seek bar.

When a data position, which is not stored in the buffer, has been designated as the playback position, the player software starts acquiring a corresponding data part from the content server, and stores the data part in the buffer (seek). This buffering requires a predetermined time. Thus, due to a time lag from when a new data part was requested to when the data part is stored in the buffer, a length of waiting time is needed until playback is started from the designated data position.

In general, in multimedia content data of a file format for streaming, a video data part and an audio data part, which are close to each other with respect to playback time, are successively arranged.

However, there also is multimedia content data of a file format which is not for streaming. In such multimedia content data, it is possible that a video data part and an audio data part, which are to be successively played back and are close to each other with respect to playback time, are not successively arranged. In the seek for such multimedia content data, it is possible that the response of seek lowers due to a process for receiving non-successive individual data parts from the content server, that is, the time lag for buffering of these data parts increases. Thus, even if playback of multimedia content data is once resumed from a designated data position, the playback may immediately be stopped once again. The reason for this is that a waiting time may possibly occur for buffering another data part which is to be played back subsequently to the data part at the designated data position.

A general architecture that implements the various features of the embodiments will now be described with reference to the drawings. The drawings and the associated descriptions are provided to illustrate the embodiments and not to limit the scope of the invention.
FIG. 1 is an exemplary perspective view illustrating the external appearance of an electronic apparatus according to an embodiment.
FIG. 2 shows an example of a content playback screen which is displayed by player software that is executed by the electronic apparatus of the embodiment.
FIG. 3 is an exemplary block diagram illustrating the system configuration of the electronic apparatus of the embodiment.
FIG. 4 is an exemplary block diagram illustrating the configuration of the player software which is executed by the electronic apparatus of the embodiment.
FIG. 5 is a view for describing a buffer management operation which is executed by the player software of FIG. 4.
FIG. 6 is a view for describing a seek control operation which is executed by the player software of FIG. 4.
FIG. 7 shows an arrangement example of audio data parts and video data parts in multimedia content data for streaming. ,
FIG. 8 shows an arrangement example of audio data parts and video data parts in multimedia content data not for streaming.
FIG. 9 shows another arrangement example of audio data parts and video data parts in multimedia content data not for streaming.
FIG. 10 is an exemplary view for explaining a phenomenon in which the response of seek lowers.
FIG. 11 is an exemplary view for describing an example of a buffer release control operation.
FIG. 12 is an exemplary view for explaining a request for data which was present in a released buffer area, which may possibly occur when the buffer release control operation of FIG. 11 is used.
FIG. 13 is an exemplary view for describing a buffer release control operation which is executed by the player software of FIG. 4.
FIG. 14 is an exemplary view for describing a playback stop operation which is executed when the amount of buffered data decreases.
FIG. 15 is an exemplary view for describing a state in which playback is suddenly stopped.
FIG. 16 is an exemplary view for describing a playback stop operation which is executed by the player software of FIG. 4.
FIG. 17 is an exemplary flow chart illustrating the procedure of a playback control operation which is executed by the player software of FIG. 4.
FIG. 18 is an exemplary flow chart illustrating the procedure of a seek control operation which is executed by the player software of FIG. 4.
FIG. 19 is an exemplary flow chart illustrating the procedure of a buffer release operation which is executed by the player software of FIG. 4.
FIG. 20 is an exemplary flow chart illustrating a procedure which is executed by the player software of FIG. 4 when the amount of buffered data decreases.

Various embodiments will be described hereinafter with reference to the accompanying drawings.

In general, according to one embodiment, an electronic apparatus plays back multimedia content data in which video data and audio data are multiplexed, while receiving the multimedia content data from a server. The electronic apparatus comprises a buffer, a playback module and a control module. The buffer is configured to store the received data in the multimedia content data. The playback module is configured to play back a video data part and an audio data part in data parts stored in the buffer. The control module is configured to start, when a playback position has been changed to a first data position in the multimedia content data, which has not yet been stored in the buffer, a first buffering process for successively receiving data parts, which follow the first data position in the multimedia content data, from the server, and storing the data parts in the buffer. The control module is configured to skip, when an audio data part in the multimedia content data, which is not stored in the buffer, has been requested by the playback module after a predetermined amount of data was stored in the buffer by the first buffering process, execution of a second buffering process for receiving the requested audio data part from the server and storing the audio data part in the buffer, to continue the first buffering process, and to cause the playback module to skip playback of the audio data part requested by the playback module.

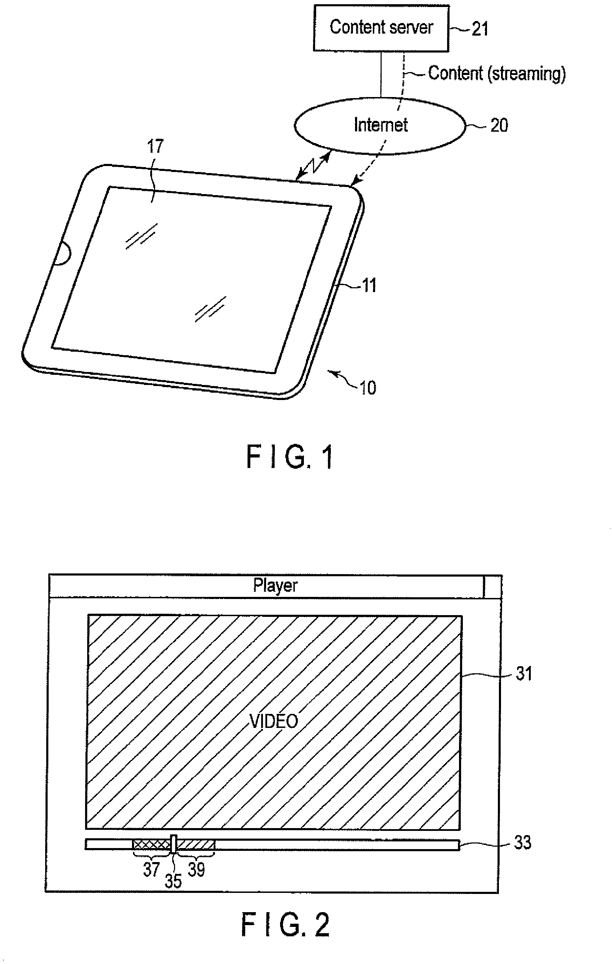

FIG. 1 is a perspective view illustrating the external appearance of an electronic apparatus according to an embodiment. This electronic apparatus is realized, for example, as a slate-type personal computer (PC), a laptop-type PC, a smartphone, or a PDA. In the description below, the case is assumed that the electronic apparatus is realized as a slate-type personal computer 10. As shown in FIG. 1, the slate-type personal computer 10 comprises a computer main body 11 and a touch-screen display 17.

The computer main body 11 has a thin box-shaped housing. A liquid crystal display (LCD) and a touch panel are built in the touch-screen display 17. The touch panel is provided so as to cover the screen of the LCD. The touch-screen display 17 is attached to the computer main body 11 in such a manner that the touch-screen display 17 is laid over the top surface of the computer main body 11.

The computer 10 includes a content playback function of playing back multimedia content data by streaming. The content playback function is executed by player software which is installed in the computer 10. The content playback operation by the player software may be executed by making use of a multimedia framework which is provided by an operating system of the computer 10. The computer 10 incorporates a communication device which communicates with a wired or wireless network, and the communication between the computer 10 and Internet 20 is executed via this communication device.

The multimedia content data is a data stream in which video data and audio data are multiplexed. The video data may be compression-encoded, and the audio data may also be compression-encoded.

The player software receives multimedia content data from a content server 21 via a network such as the Internet 20. While receiving the multimedia content data, the player software plays back the multimedia content data. In the computer 10, a received data part in the multimedia content data is stored in a buffer. The buffer is a part of a memory in the computer 10. After a predetermined amount of data has been accumulated in the buffer, the player software starts playback of the multimedia content data.

In a playback process of multimedia content data, each of the video data part and audio data part, which are stored in the buffer, is played back. During the playback process of the multimedia content data, the player software may execute a read-ahead process. The read-ahead process is a buffering process of successively receiving data parts, which are temporally forward of the present playback position, from the content server 21, and storing the data parts in the buffer.

FIG. 2 illustrates an example of a content playback screen which is displayed on the display 17 by the player software. The content playback screen displays a video display area 31 and a seek bar 33. The video display area 31 is a display area for displaying an image (moving picture) of video data in multimedia content data. The seek bar 33 is a graphical user interface for enabling the user to control the playback position of multimedia content data.

The left end and right end of the seek bar 33 correspond to a beginning end position and a terminal end position of multimedia content data that is a playback target. During the playback period of multimedia content data, the playback position of the multimedia content data is automatically updated with the passing of time. An offset value from a starting point, which is set at the beginning end position of the multimedia content data, may be used as a value indicative of a data position, such as a playback position, in the multimedia content data. An offset value corresponding to a certain data position indicates a data size from the beginning end position of the multimedia content data to this data position.

The seek bar 33 displays a slider 35. The slider 35 indicates a present playback position in the multimedia content data. Specifically, the slider 35 indicates the status of progress of playback of the multimedia content data. By moving the slider 35 by using a pointing device, the user can change the playback position in the multimedia content data.

The seek bar 33 further displays a playback-finished section 37 and a seekable section 39 on the seek bar 33. The playback-finished section 37 indicates a data section of that data part in the sequence of the multimedia content data, which has already been played back and still remains in the buffer. The seekable section 39 indicates that data part in the sequence of the multimedia content data, which is yet to be played back and has already been stored in the buffer. The above-described read-ahead process (buffering process) may be executed so that the seekable section 39 may become, as much as possible, a predetermined time or more.

When the slider 35 has been moved to an arbitrary position within the seekable section 39, the playback position is immediately changed to the position in the seekable section 39, which is indicated by the slider 35. When the slider 35 has been moved to an area outside the seekable section 39, or in other words, when the playback position has been changed to a first data position in the multimedia content data, which has not yet been stored in the buffer, the player software starts a buffering process. In the buffering process, the player software successively receives, from the content server, data parts which follow the above-described first data position (seek start position) in the multimedia content data, and stores the received data parts in the buffer. Until a predetermined amount of data has been stored in the buffer by the buffering process, the playback of multimedia content data is stopped. After the predetermined amount of data has been stored in the buffer by the buffering process, the playback of multimedia content data is resumed from the first data position.

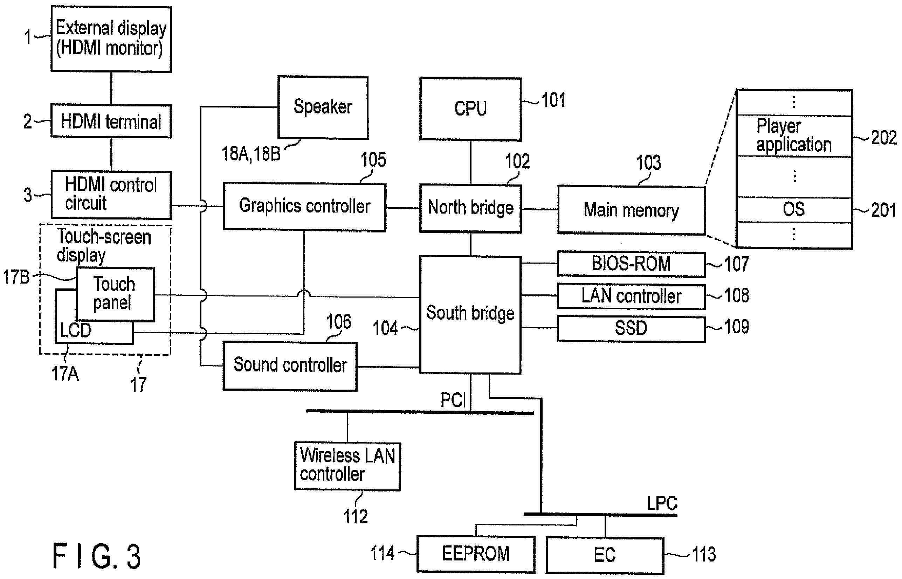

FIG. 3 illustrates the system configuration of the computer 10.

The computer 10, as shown in FIG. 3, comprises a CPU 101, a north bridge 102, a main memory 103, a south bridge 104, a graphics controller 105, a sound controller 106, a BIOS-ROM 107, a LAN controller 108, a solid-state drive (SSD) 109, a wireless LAN controller 112, an embedded controller (EC) 113, an EEPROM 114, and an HDMI control circuit 3.

The CPU 101 is a processor for controlling the operation of the respective components of the computer 10. The CPU 101 executes an operating system (OS) 201 and various application programs, which are loaded from the SSD 109 into the main memory 103. The application programs include a player application program 202. This player application program 202 is the above-described player software, and is executed on the operating system (OS) 201.

Besides, the CPU 101 executes a BIOS that is stored in the BIOS-ROM 107. The BIOS is a program for hardware control.

The north bridge 102 is a bridge device which connects a local bus of the CPU 101 and the south bridge 104. The north bridge 102 includes a memory controller which access-controls the main memory 103. The north bridge 102 also has a function of communicating with the graphics controller 105 via, e.g. a PCI EXPRESS serial bus.

The graphics controller 105 is a display controller which controls an LCD 17A that is used as a display monitor of the computer 10. A display signal, which is generated by the graphics controller 105, is sent to the LCD 17A. The LCD 17A displays video, based on the display signal. A touch panel 17B is disposed on the LCD 17A. The touch panel 17B is a pointing device for executing an input on the screen of the LCD 17A. The user can operate, for example, a graphical user interface (GUI), which is displayed on the screen of the LCD 17A, by using the touch panel 17B. For example, by touching a button displayed on the screen, the user can instruct execution of a function corresponding to this button.

The HDMI terminal 2 is an external display connection terminal. The HDMI terminal 2 is capable of sending a non-compressed digital video signal and digital audio signal to an external display device 1 via a single cable. The HDMI control circuit 3 is an interface for sending a digital video signal to the external display device 1, which is called "HDMI monitor", via the HDMI terminal 2. In short, the computer 10 can be connected to the external display device 1 via, e.g. the HDMI terminal 2.

The south bridge 104 controls devices on a PCI (Peripheral Component Interconnect) bus and devices on an LPC (Low Pin Count) bus. The south bridge 104 includes an ATA controller for controlling the SSD 109.

The south bridge 104 includes a USB controller for controlling various USB devices. Further, the south bridge 104 has a function of communicating with the sound controller 106. The sound controller 106 is a sound source device and outputs audio data, which is a target of playback, to the speakers 18A and 18B. The LAN controller 108 is a wired communication device which executes wired communication of, e.g. the IEEE 802.3 standard. The wireless LAN controller 112 is a wireless communication device which executes wireless communication of, e.g. the IEEE 802.11 standard.

The EC 113 is a one-chip microcomputer including an embedded controller for power management. The EC 113 has a function of powering on/off the computer 10 in accordance with the user's operation of the power button.

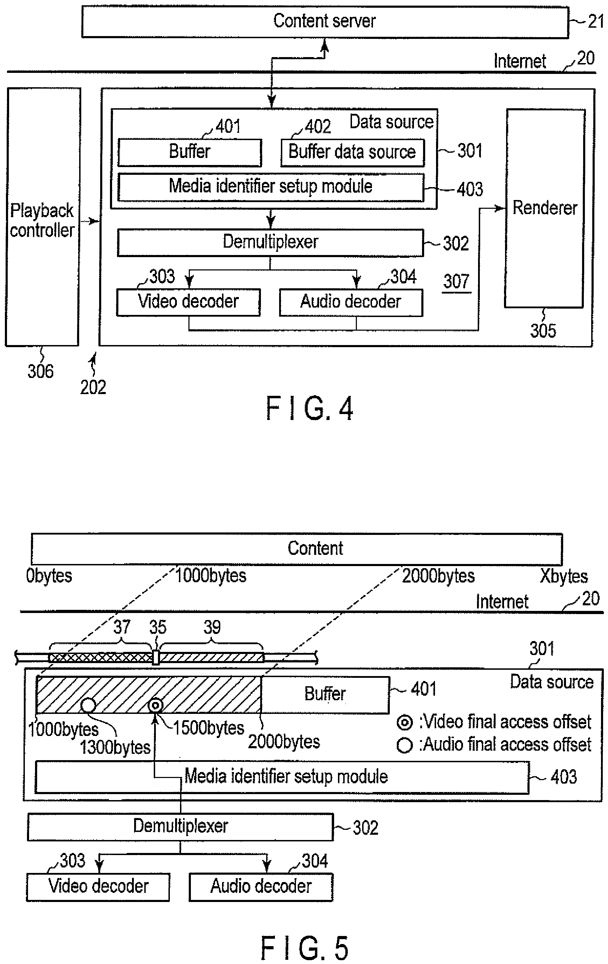

Next, referring to FIG. 4, the functional configuration of the player application program 202 is described.

The player application program 202 includes a data source 301, a demultiplexer 302, a video decoder 303, an audio decoder 304, a renderer 305 and a playback controller 306. The data source 301 successively executes, under the control of the playback controller 306, processes for receiving multimedia content data from the content server 21, and stores the received data parts in a buffer 401 ("buffering"). In the process of receiving the multimedia content data from the content server 21, HTTP streaming, for instance, may be used. In this case, the data source 301 requests data parts from the content server 21, and receives the requested data parts from the content server 21.

The demultiplexer 302, video decoder 303, audio decoder 304 and renderer 305 function as a playback module 307 which plays back a video data part and audio data part included in the data parts stored in the buffer 401.

The demultiplexer 302 receives data from the buffer 401 in the data source 301, and separates the received data into a video data part and an audio data part. The video decoder 303 decodes the video data part, and sends the decoded video data part to the renderer 305. The audio decoder 304 decodes the audio data part and sends the decoded audio data part to the renderer 305. The renderer 305 displays a moving picture of the decoded video data part on the video display area 31. Further, the renderer 305 outputs sound corresponding to the decoded audio data part via the speakers, etc.

The playback controller 306 controls the playback operation of content data by the player application program 202. To be more specific, the playback controller 306 controls the data source 301, demultiplexer 302, video decoder 303, audio decoder 304 and renderer 305.

The buffering process of multimedia content data is started from a start point which corresponds to an offset value included in an access request which is sent from the demultiplexer 302 to the data source 301. In this case, the offset value indicates a data size (offset) from the beginning end position of the multimedia content data to the playback target position of the multimedia content data. The execution of playback is suspended until a predetermined amount of data is stored in the buffer 401. At a time point when the predetermined amount of data has been stored in the buffer 401, the playback of the multimedia content data is started. During the playback, the demultiplexer 302 successively issues access requests. If a data part, which is indicated by the offset value included in the access request, is stored in the buffer 401, this data part is immediately sent from the data source 301 to the demultiplexer 302.

The offset value designated by the access request from the demultiplexer 302 is recorded in the data source 301 as a final access offset. This final access offset is used in a buffer amount management process by the buffer amount management module (buffer data source) 402.

In the present embodiment, two stream buffers, which correspond to video data and audio data, respectively, are not used. Instead, video data and audio data are stored in the same buffer 401. The configuration in which the same buffer 401 is used for storing video data and for storing audio data makes it possible to reduce the necessary memory capacity and necessary data transfer rate.

In this embodiment, the data source 301 further includes a media identifier setup module 403. The media identifier setup module 403 individually manages the final access offset of video data (video final access offset) and the final access offset of audio data (audio final access offset), according to whether the access request from the demultiplexer 302 is a request for video data (video access request) or a request for audio data (audio access request).

Next, referring to FIG. 5, a description is given of examples of the video final access offset and audio final access offset. The video final access offset is an offset value designated by the last video access request. The audio final access offset is an offset value designated by the last audio access request.

The case is now assumed that multimedia content data, in which a video data part and an audio data part, which are close to each other with respect to playback time, are disposed relatively discretely, is played back by using streaming. An example of such multimedia content data is content data of a format such as ASF (Advanced Systems Format). A content data file corresponding to the ASF includes a header part, which includes information of, e.g. playback time length of content, a data part, and index information. The index information is indicative of offset values of respective video data parts which exist in the data part. The demultiplexer 302 receives index information from the playback controller 306, and calculates offset values of video data parts and audio data parts, based on the index information.

In FIG. 5, a data part (also referred to as "data section") from an offset value "1000 bytes" to an offset value "2000 bytes" in the sequence of multimedia content data is buffered. The data section from a maximum value, which is chosen from between the video final access offset and audio final access offset, to the terminal end of the data in the buffer 401 is displayed as the seekable section 39 on the above-described seek bar 33, that is, as an already buffered data section. For example, if the video final access offset is indicative of 1500 bytes and an the audio final access offset is indicative of 1300 bytes, the data section from 1500 bytes to the terminal end (2000 bytes) of the data in the buffer 401 is displayed as the seekable section 39. Specifically, in the embodiment, the seekable section 39 is displayed on the seek bar 33, based on the difference between the maximum value chosen from between the video final access offset and audio maximum access offset, on the one hand, and the offset value of the terminal end of the data in the buffer 401, on the other hand.

When the slider 35 has been moved to a data position which is temporally forward of the seekable section 39, that is, when the playback position has been changed to a position outside the buffered data section, the playback controller 306 stops playback, releases the buffer 401, and executes once again buffering by using the data source 301 ("seek to the outside of the buffered data section"). To be more specific, the playback controller 306 starts a buffering process of successively receiving from the content server 21 data parts which follow the changed playback position and storing the data parts in the buffer 401. At a time point when a predetermined amount of data has been stored in the buffer 401, the playback controller 306 resumes the playback. The demultiplexer 302 issues an access request including an offset value indicative of the changed playback position (e.g. a data position which is temporally forward of the position "2000 bytes"). Upon receiving this access request, the data source 301 reads out the access-requested data part from the buffer 401 and sends it to the demultiplexer 302.

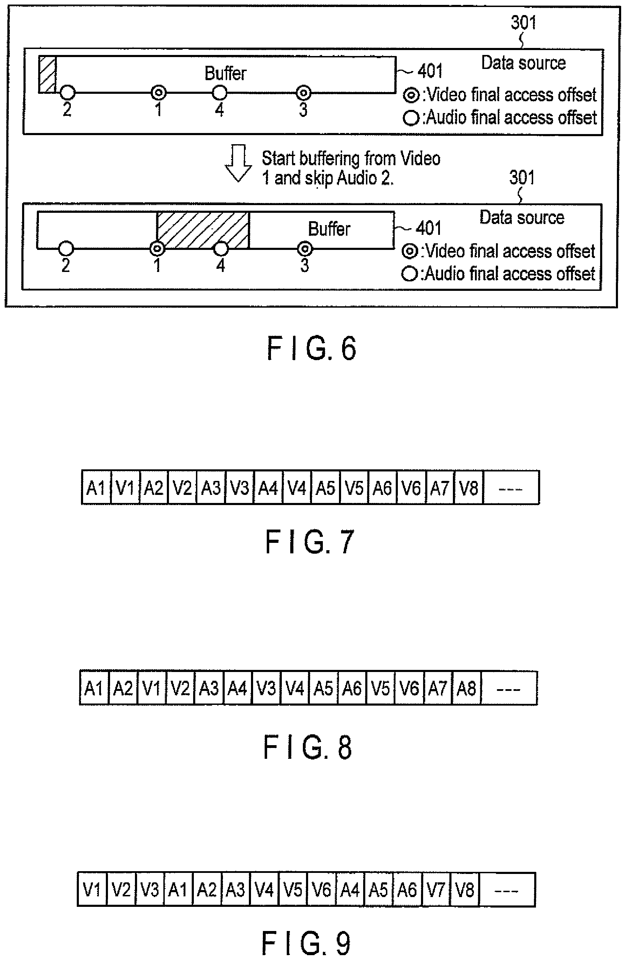

Next, referring to FIG. 6, a seek control operation in the embodiment is described.

At the time of seek to the outside of the buffered data section, the demultiplexer 302 may send video access requests and audio access requests to the data source 301 in the following order:
(1) Request for video 1,
(2) Request for audio 2,
(3) Request for video 3, and
(4) Request for audio 4.

Video 1, audio 2, video 3 and audio 4 are data parts which to be played back in the named order. In multimedia content data which is not for streaming, the offset values of video 1, audio 2, video 3 and audio 4 are not arranged in the order of video 1, audio 2, video 3 and audio 4. For example, as shown in FIG. 6, there is a case in which the offset values of video 1, audio 2, video 3 and audio 4 are arranged in the order of audio 2, video 1, audio 4 and video 3. In this case, as described above, it is possible that the response of seek considerably lowers. A concrete description of this will be given below.

At the time of seek to the outside of the buffered data section, the buffer 401 is first released. Then, the buffering process is started for successively receiving data parts which follow the offset value corresponding to video 1 and storing the data parts in buffer 401. If a predetermined amount of data has been stored in the buffer 401, playback is resumed. The demultiplexer 302 sends a request for video 1 to the data source 301. Since video 1 is stored in the buffer 401, the video 1 is read out of the buffer 401 and sent to the demultiplexer 302, and the video 1 is played back. Thereafter, the demultiplexer 302 transmits a request for audio 2 to the data source 301. At this time point, since audio 2 is not stored in the buffer 401, the playback of multimedia content data is stopped once again. At this time, the playback controller 306 starts buffering data parts which follow the offset value corresponding to audio data 2. If a predetermined amount of data is stored in the buffer 401, the playback is resumed. The audio data 2 is sent to the demultiplexer 302, and the audio data 2 is played back. Then, the demultiplexer 302 sends a request for video 3 to the data source 301. At this time point, video 3 may not be stored in the buffer 401. Thus, the playback of the multimedia content data is stopped once again.

In the present embodiment, the seek control operation, as described below, is executed in order to prevent such a situation from occurring that the playback operation is frequently stopped due to the lowering of the response of seek.

When the playback position has been changed to a first data position in multimedia content data, which has not yet been stored in the buffer 401, the playback controller 306 temporarily stops playback and releases the buffer 401. Then, the playback controller 306 starts a first buffering process by using the data source 301. In the first buffering process, such a process is executed for successively receiving from the content server 21 data parts which follow the first data position in multimedia content data and storing the data parts in the buffer 401. After a predetermined amount of data has been stored in the buffer 401 by the first buffering process, the playback controller 306 causes the playback module 307 to resume playback of multimedia content data from the first data position. After the playback has been resumed, that is, after the predetermined amount of data has been stored in the buffer 401 by the first buffering process, an audio data part in the multimedia content data, which is not stored in the buffer 401, may be requested by the demultiplexer 302. In this case, since the start position of a buffering process is usually changed, the first buffering process is stopped, and instead, a second buffering process may be started for receiving the requested audio data part from the content server 21 and storing the audio data part in the buffer 401.

In the present embodiment, the playback controller 306 skips the execution of the second buffering process for receiving the requested audio data part from the content server 21 and storing the audio data part in the buffer 401, continues the above-described first buffering process, and causes the playback module 307 to skip playback of the requested audio data part. In other words, the access request for audio data, which is not stored in the buffer 401, is ignored.

The case is now assumed that the playback position has been changed to an offset value corresponding to video 1, which is located outside the buffered data section. In the first buffering process, data parts which follow the offset value corresponding to video 1, namely, video 1, audio 4, video 3,..., are successively buffered. Specifically, the playback controller 306 successively transmits data acquisition requests while increasing the offset value, thereby receiving video 1, audio 4, video 3,..., from the content server 21 in the name order. In the first buffering process, if a predetermined amount of data, for example, if the data part corresponding to video 1 and a portion of the data part corresponding to audio 4, have been stored in the buffer 401, the playback of the multimedia content data is resumed, and video 1 is first played back. Thereafter, the demultiplexer 302 requests data of audio 2. Since this request is an access request for audio data which is not stored in the buffer 401, the playback controller 306 ignores this access request, and skips the execution of the buffering process of receiving audio 2 from the content sever 21 and storing it in the buffer 401. In addition, the playback controller 306 causes the playback module 307 to skip playback of audio 2. By skipping the buffering process for audio 2, the process for successively buffering the data parts which follow the first requested video 1 is continuously executed.

At a time point when a request for audio 4 occurs, the audio 4 may have already been buffered. In this case, the playback of audio 4 is not skipped, and the audio 4 is played back as usual.

Accordingly, in the present embodiment, while multimedia content data which is not for streaming is being played back, if the playback position has been changed to the first data position in the multimedia content data, which has not yet been stored, playback of video alone is executed during a predetermined starting time period, and no audio is played back. After the passage of the predetermined period, both video and audio are played back. By skipping buffering and playback of some audio data part in this manner, the multimedia content data, in which the video data part and audio data part, which are close to each other with respect to playback time, are not successively arranged, can smoothly be played back.

Next, referring to FIG. 7 to FIG. 9, a description is given of examples of arrangements of audio data parts and video data parts in multimedia content data.

FIG. 7 illustrates multimedia content data having a format for streaming. Each of audio data parts A1, A2, A3,..., is a data part corresponding to a playback time of, e.g. one second. Similarly, each of video data parts V1, V2, V3,..., is a data part corresponding to a playback time of, e.g. one second. An audio data part and a video data part, which have the common suffix number, are data parts which are to be played back at the same time point or at mutually close time points. As shown in FIG. 7, in the multimedia content data having the format for streaming, the video data part and audio data part at mutually close playback time points are successively arranged.

FIG. 8 illustrates an example of multimedia content data not for streaming. FIG. 9 illustrates another example of multimedia content data not for streaming.

As in these examples, in the multimedia content data not for streaming, a video data part and an audio data part at mutually close playback time points are not successive.

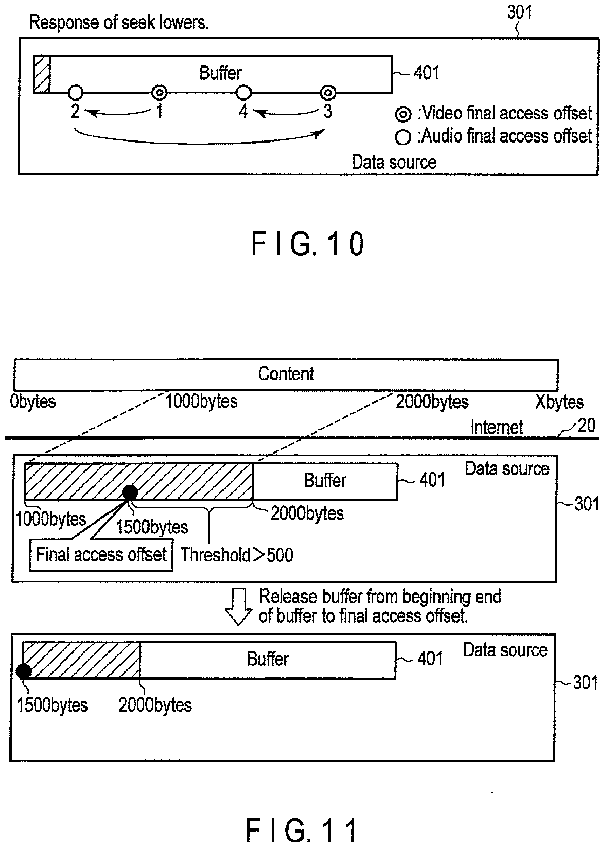

At the time of seek for the multimedia content data of FIG. 8 or FIG. 9, offset values designated by successive access requests do not increase monotonously. As shown in FIG. 10, the offset value of the access target may increase or decrease. Consequently, lowering of the response of seek is caused, as described above.

The case is now assumed that the playback position has been changed to a position corresponding to video data V4 in the state in which a data section of the audio data part A1 onwards of the multimedia content data of FIG. 9 has not been buffered. The playback of the multimedia content data is temporarily stopped. The buffer 201 is released, and a process of successively buffering data parts (V4, V5, V6, A4, A5, A6, V7, V8...) of video data V4 onwards is started. For example, when video data V4 and V5 have been buffered, the playback of the multimedia content data is resumed from the video data V4. Then, a request for audio data A4 occurs. The audio data A4 has not yet been buffered. Thus, the playback is stopped once again. Moreover, since the offset position of audio data A4 is temporally forward of the offset value (e.g. offset value corresponding to video data V5) indicative of the present terminal end of the data in the buffer 401, the buffer 201 may be released once again. Then, the start point of the buffering is changed, and thereby the process of successively buffering the data parts (A4, A5, A6, V7, V8,...) of audio data A4 onwards is started.

In the present embodiment, a seek operation, as described below, is executed for the multimedia content data of FIG. 9.

The case is now assumed that the playback position has been changed to a data position corresponding to video data V4 in the state in which a data section of the audio data part A1 onwards has not been buffered. The playback of the multimedia content data is temporarily stopped. The buffer 201 is released, and a process of successively buffering data parts (V4, V5, V6, A4, A5, A6, V7, V8...) of video data V4 onwards is started. For example, when video data V4 and V5 have been buffered, the playback of the multimedia content data is resumed from the video data V4.

Thereafter, an access request for the audio data A4 occurs. The audio data A4 has not yet been buffered. Thus, the buffering and playback of audio data A4 are skipped. Accordingly, since the start point of the buffering process is not changed, the buffering process for the other respective data parts, which have not yet been buffered, is continued. After the playback of audio data A4 has been skipped, an access request for video data V5 occurs. Since the video data V5 has already been buffered, the video data V5 is immediately sent to the playback module 307. Thereafter, an access request for audio data A5 occurs. If the audio data A5 has already been buffered, the audio data A5 is also immediately sent to the playback module 307.

Next, referring to FIG. 11 to FIG. 13, a buffer release control operation for releasing the buffer 401 is described. The release of the buffer is a process of setting the memory area in the buffer 401, in which data is stored, in a free state in which no data is stored.

FIG. 11 illustrates a buffer release control operation in a case where a video final access offset and an audio final access offset are not distinguished. When the data amount from a final access offset value to the terminal end of the data in the buffer 401 is less than a first threshold, or in other words, when the difference between the final access offset value and the offset value indicative of the terminal end of the data in the buffer 401 is less than the first threshold, the data range from the beginning end of the data in the buffer 401 to the final access offset value is invalidated in order to increase the size of the free memory area in the buffer 401, and the memory area in the buffer 401, which corresponds to this data range, is released. For example, the case is assumed that a data part from the offset value "1000 bytes" to the offset value "2000 bytes" in the multimedia content data is stored in the buffer 401. It is assumed that the first threshold is 600 bytes. When the final access offset value reaches 1500 bytes, the difference between the final access offset value "1500 bytes" and the offset value "2000 bytes" at the terminal end of the data in the buffer 401 becomes less than the first threshold. In this case, the data range from the beginning end "1000 bytes" of the data part to the final access offset "1500 bytes" is invalidated.

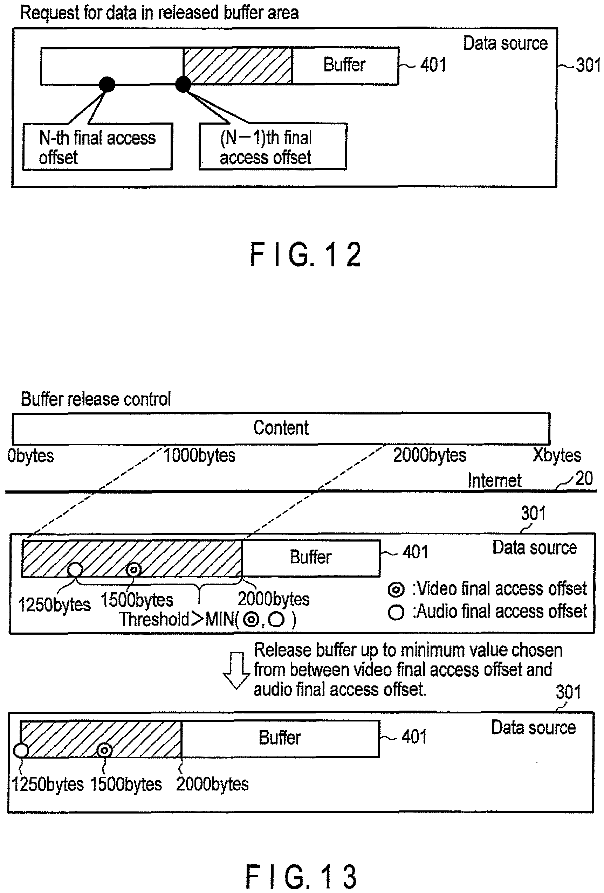

However, if the above-described buffer release control operation is applied to multimedia content data which is not for streaming, it is possible that a data part at an offset position, which is to be next requested with high possibility, is invalidated, despite this data having been buffered. This possible state is illustrated in FIG. 12. In FIG. 12, the case is assumed that the difference between the final access offset value corresponding to an (N-1)th access request and the offset value indicative of the terminal end of the data in the buffer 401 is less than the first threshold. When the (N-1)th access request has occurred, the data range from the beginning end of the data in the buffer 401 to the (N-1)th final access offset value is invalidated, and thereby the memory area corresponding to this data range is released. Next, an N-th access request occurs. The N-th access request may include an offset value requesting a data part which existed in the already released memory area.

In the present embodiment, a buffer release control operation, as illustrated in FIG. 13, is executed in order to prevent such a situation from occurring that a data part at an offset position, which is to be next requested with high possibility, is invalidated, despite this data having been buffered.

Specifically, in the buffer release control operation of the embodiment, a minimum value, which is chosen from between a video final access offset and an audio final access offset, is used as a reference value for the buffer release control operation.

When the difference between the minimum value chosen from between the video final access offset and the audio final access offset, on the one hand, and the offset value indicative of the terminal end of the data in the buffer 401, on the other hand, is less than the first threshold, the playback controller 306 invalidates the data range from the beginning end of the data in the buffer 401 to the above-described minimum value, and releases the memory area in the buffer 401, which corresponds to this data range, thereby to increase the size of the free memory area in the buffer 401.

For example, the case is now assumed that a data part from an offset value "1000 bytes" to an offset value "2000 bytes" of multimedia content data is stored in the buffer 401. It is assumed that the first threshold is 800 bytes. The video final access offset value is 1500 bytes, and the audio final access offset value is 1250 bytes. In this case, the minimum value chosen from between the video final access offset and audio final access offset is 1250 bytes, that is, the audio final access offset value. Then, the data range from the beginning end "100 bytes" of the data part to the audio final access offset "1250 bytes" is invalidated, and the memory area in the buffer 401, which corresponds to this data range, is released. The data, which is left in the buffer 401, is the data from the offset value "1250 bytes" to the offset value "2000 bytes".

The case, in which the audio final access offset value is less than the video final access offset value, has been described by way of example. However, when the audio final access offset value is greater than the video final access offset value, the video final access offset value is used as the minimum value chosen from between the video final access offset and audio final access offset.

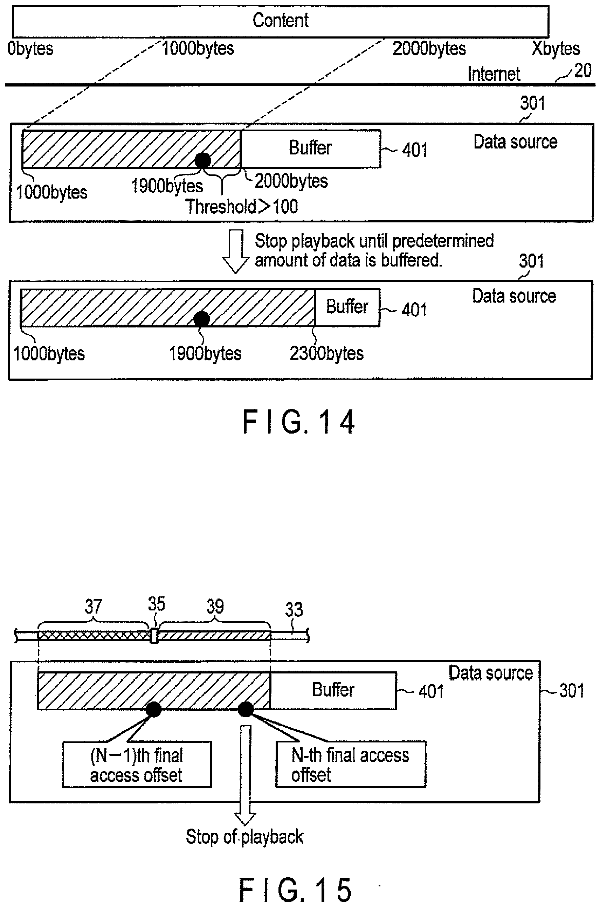

Next, referring to FIG. 14 to FIG. 16, a description is given of a playback stop operation which is executed when the buffered data amount decreases.

FIG. 14 illustrates control of a playback stop operation in a case where a video final access offset and an audio final access offset are not distinguished. When the data amount from the final access offset value to the offset value indicative of the terminal end of the data in the buffer 401 is less than a second threshold, or in other words, when the difference between the final access offset value and the offset value indicative of the terminal end of the data in the buffer 401 is less than the second threshold, the playback of the multimedia content data is stopped until a predetermined amount of data is accumulated in the buffer 401.

For example, the case is now assumed that a data part from an offset value "1000 bytes" to an offset value "2000 bytes" of the multimedia content data is stored in the buffer 401. It is assumed that the second threshold is 150 bytes. When the final access offset value reaches, e.g. 1900 bytes, the difference between the final access offset value "1900 bytes" and the offset value "2000 bytes" at the terminal end of the data in the buffer 401 becomes less than the second threshold. In this case, the playback of the multimedia content data is stopped until a predetermined amount of data is accumulated in the buffer 401.

However, if the above-described playback stop control is applied to multimedia content data which is not for streaming, it is possible that the playback operation is suddenly stopped, despite a sufficient seekable section 39 existing on the seek bar 401. FIG. 15 illustrates this possible state. In FIG. 15, the seek bar 33 at an (N-1)th access time point is shown. At this time point, a predetermined amount of data, which is temporally forward of the final access offset (the offset designated by the (N-1)th access request), is stored in the buffer 401 as the seekable section 39. However, in the multimedia content data which is not for streaming, an audio data part and a video data part, which are temporally close to each other, are not successive, an offset value, which is designated by an N-th access request, may designate a relatively distant position which is temporally forward of the offset designated by the (N-1)th access request. In this case, such a phenomenon occurs that the playback operation is suddenly stopped, despite the sufficient seekable section 39 existing on the seek bar 401.

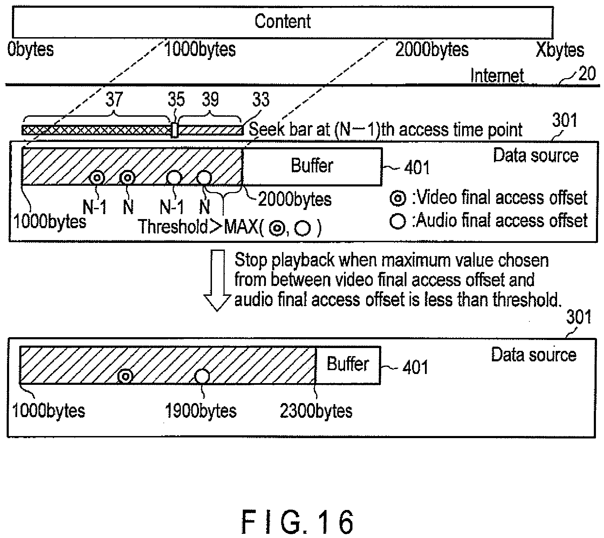

In the present embodiment, as shown in FIG. 16, the buffered data section (seekable section 39) is displayed on the seek bar 33, based on the difference between the maximum value chosen from between the video final access offset and audio maximum access offset, on the one hand, and the offset value indicative of the terminal end of the data in the buffer 401, on the other hand. Further, the playback stop control is executed by using, as a reference value, the maximum value chosen from between the video final access offset and audio maximum access offset.

Specifically, when the difference between the maximum value chosen from between the video final access offset and audio final access offset, on the one hand, and the offset value indicative of the terminal end of the data in the buffer 401, on the other hand, is less than the second threshold, the playback controller 306 stops the playback of the multimedia content data until a predetermined amount of data is accumulated in the buffer 401.

In FIG. 16, the case is assumed that the audio final access offset value is greater than the video final access offset value. In this case, the buffered data section (seekable section 39) is displayed on the seek bar 33, based on the difference between the audio final access offset value and the offset value indicative of the terminal end of the data in the buffer 401. The display of the seek bar 33 in FIG. 16 corresponds to the (N-1)th access time point.

By this playback stop control, it becomes possible to prevent such a situation that the playback operation is suddenly stopped, despite the sufficient seekable section 39 existing on the seek bar 401.

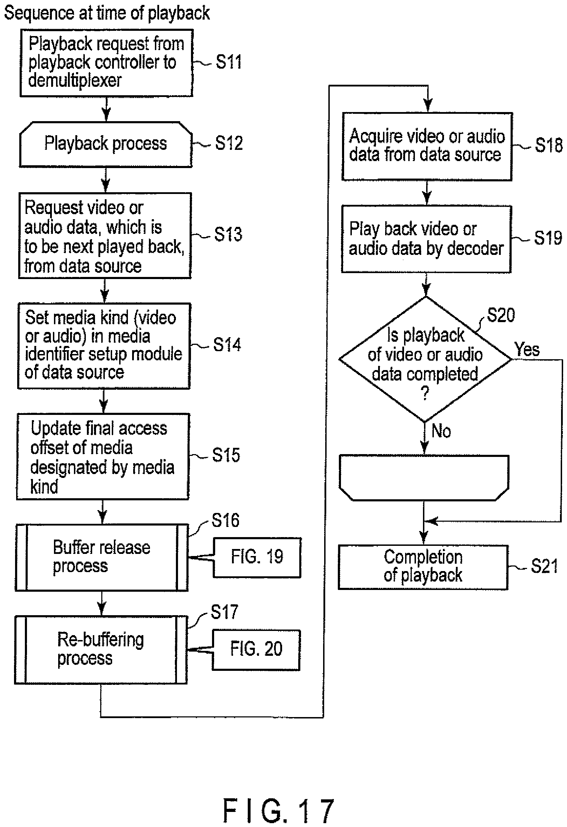

Next, referring to a flow chart of FIG. 17, a description is given of the procedure of a playback control process which is executed by the player application program 202.

In the player application program 202, based on the index information of multimedia content data that is a playback target, the playback controller 306 starts the buffering process for successively receiving data parts in the multimedia content data from the content server 21, and storing the data parts in the buffer 401. When a predetermined amount of data has been stored in the buffer 401, the playback controller 306 issues a playback request to the demultiplexer 302 (step S11). Thereby, a playback process for playing back the multimedia content data by streaming is started (step S12). In the meantime, it is possible to first issue a playback request to the demultiplexer 302 from the playback controller 306, and then start the buffering process.

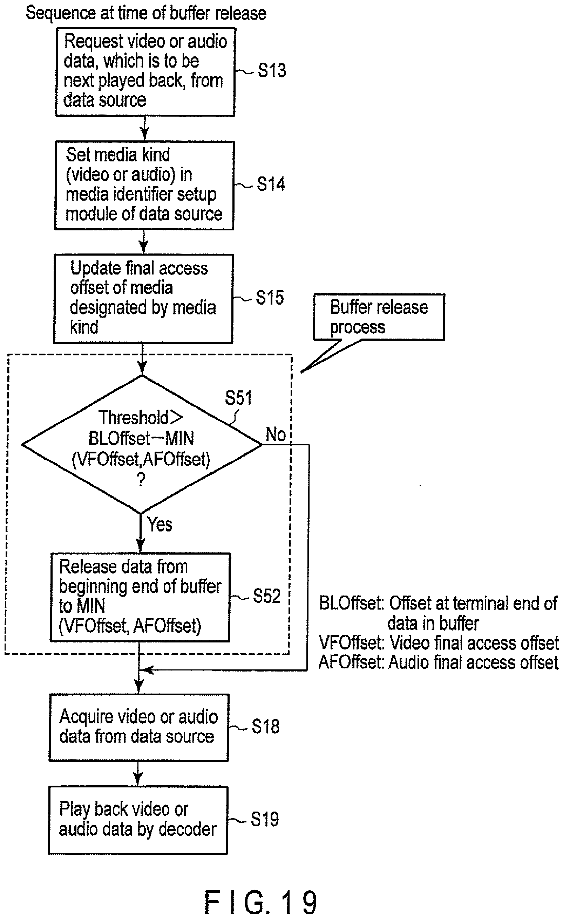

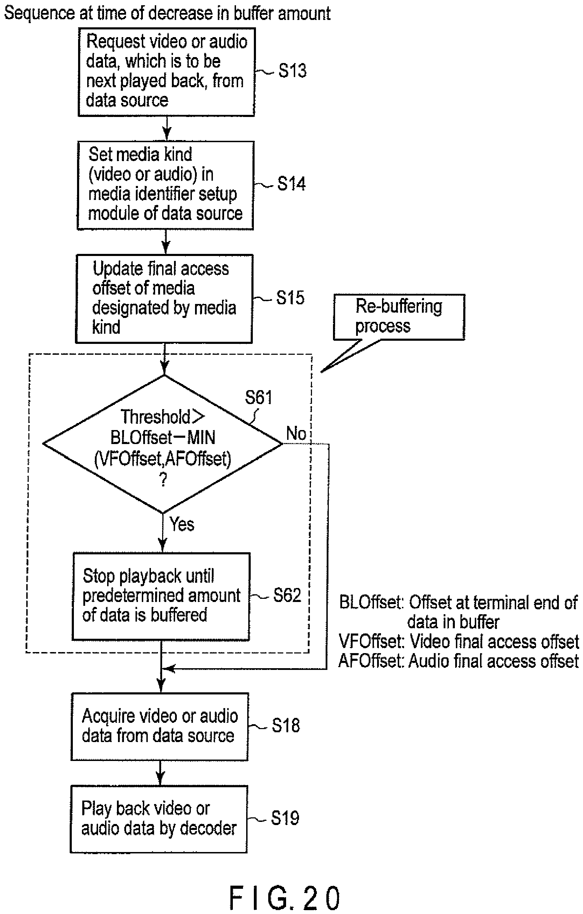

In the playback process, based on the index information of the multimedia content data, the demultiplexer 302 requests data (video or audio), which is to be next played back, from the data source 301 (step S13). In the data source 301, information indicative of the media kind (video or audio), which has been access-requested, is set in the media identifier setup module 403 (step S14). Further, in the data source 301, the video final access offset or audio final access offset is updated in accordance with the access-requested media kind (step S15). Then, under the control of the playback controller 306, the buffer management operation, with use of the video final access offset and audio final access offset, is executed (step S16, S17). In step S16, the above-described buffer release control operation (buffer release process) is executed. In addition, in step S17, the above-described playback stop operation (re-buffering process) for storing a predetermined amount of data in the buffer 401 by temporarily stopping the playback, is executed. The procedures of the buffer release control operation and playback stop operation will be described later in detail, with reference to FIG. 19 and FIG. 20.

If data (video or audio) that is to be next played back is sent from the data source 301 to the demultiplexer 302 (step S18), the data is decoded by the video decoder 303 or audio decoder 304, and thus played back (step S19).

Until the playback of the multimedia content data is completed, the playback, process from step S12 to step S19 is repeatedly executed. For example, if the playback progresses and the playback position reaches the terminal end of the multimedia content data, the playback process is completed (step S21).

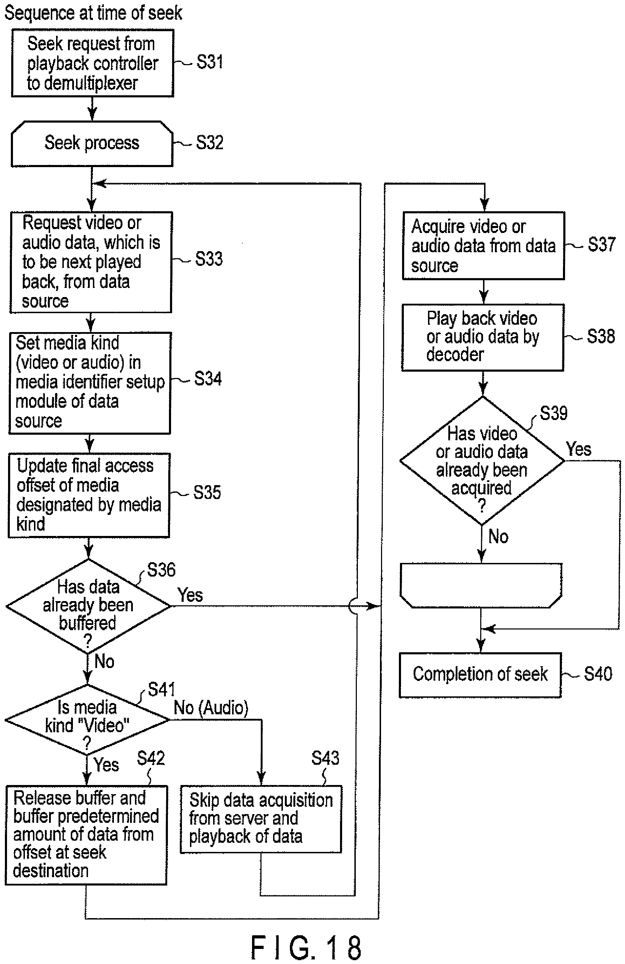

Next, referring to a flow chart of FIG. 18, a description is given of the seek control operation which is executed by the player application program 202.

When a playback position has been changed, by the move operation of the slider 35 by the user, to a data position (first data position) in multimedia content data, which has not yet been stored in the buffer 401, the following seek control operation is executed.

Specifically, the playback controller 306 causes the demultiplexer 302 to stop the playback operation, and requests the demultiplexer 302 to change the playback position to the first data position (step S31). Then, under the control of the playback controller 306, the seek process is started (step S32). In the seek process, based on the index information of the multimedia content data, the demultiplexer 302 requests data (video or audio), which is to be next played back, from the data source 301 (step S33). Immediately after the start of the seek process, in step S33, the demultiplexer 302 calculates, based on the index information of the multimedia content data, an offset value of the video part corresponding to the first data position, and sends the access request including this offset value to the data source 301. In the data source 301, the information indicative of the media kind (video or audio), which has been access-requested, is set in the media identifier setup module 403 (step S34). Further, in the data source 301, the video final access offset or audio final access offset is updated in accordance with the access-requested media kind (step S35). Then, under the control of the playback controller 306, the buffering control operation, as described below, is executed.

When the access-requested data is not stored in the buffer 401 (NO in step S36), the playback controller 306 determines whether the access-requested media kind is video or audio (step S41). If the access-requested media kind is video (YES in step S41), the playback controller 306 releases the entire memory area of the buffer 401, and executes the first buffering process of successively receiving from the content server 21 data parts which follow the offset value designated by the access request, and storing the data parts in the buffer 401 (step S42). In the first buffering process, the playback controller 306 repeatedly executes the process of successively acquiring from the content server 21 the data parts which follow the offset value designated by the access request.

If a predetermined amount data has been buffered by the first buffering process, the playback controller 306 resumes the playback operation. When data (video or audio) which is to be next played back has been sent to the demultiplexer 302 from the data source 301 (step S37), the data is decoded by the video decoder 303 or audio decoder 304, and thus played back (step S38). Until the playback of the multimedia content data is completed, the process from step S32 to step S38 is repeatedly executed. If the playback progresses and the playback position reaches the terminal end of the multimedia content data, the playback process (seek) is completed (step S40).

If the access-requested data is not stored in the buffer 401 (NO in step S36) and the media kind of the access-requested data is audio data (NO in step S41), the playback controller 306 skips the buffering and playback of the access-requested data (audio data) (step S43), and advances to step S33. Specifically, when audio data, which is not stored in the buffer 401, has been access-requested, the playback controller 306 skips the process of acquiring from the content server 21 the audio data which has been requested by the access request, and the process of causing the demultiplexer 302 to play back the audio data. Thus, during the seek period, even when audio data, which has not yet been buffered, has been requested, the start point of seek is not changed because of the acquisition of the audio data. Thereby, the first buffering process is continuously executed.

During the seek process period, when a video data part, which is not buffered, has been requested, the buffering process of step S42 is executed. In this case, the process is executed for successively receiving the requested video data part and the data parts following this data part, and storing the received data parts in the buffer 401.

In the meantime, it is possible to start the first buffering process at a time point when the playback position has been changed to the first data position, and to start the seek process from step S32 after a predetermined amount of data has been buffered.

Next, referring to a flow chart of FIG. 19, a description is given of the procedure of the buffer release control operation (buffer release process) which is executed in step S16 in FIG. 17. As illustrated in FIG. 19, in the buffer release process, the playback controller 306 determines, with use of the buffer amount management module 402, whether the following condition is satisfied:
Threshold > BLOffset - MIN(VFOffset, AFOffset)
   where BLOffset is indicative of an offset value at the terminal end of the data stored in the buffer 401. VFOffset is indicative of a video final access offset value. AFOffset is indicative of an audio final access offset value. MIN(VFOffset, AFOffset) is indicative of a function for choosing a minimum value from between two values, i.e. VFOffset and AFOffset.

When the condition, Threshold > BLOffset MIN(VFOffset, AFOffset), is satisfied (YES in step S51), the playback controller 306 invalidates the data from the beginning end of the data in the buffer 401 to MIN(VFOffset, AFOffset), and releases the memory area in the buffer 401 in which this data is stored (step S52).

Next, referring to a flow chart of FIG. 20, the procedure of the playback stop operation (re-buffering process), which is executed in step S17 in FIG. 17, is described. As illustrated in FIG. 20, in the re-buffering process, the playback controller 306 determines, with use of the buffer amount management module 402, whether the following condition is satisfied:
Threshold > BLOffset - MAX(VFOffset, AFOffset)
where BLOffset is indicative of an offset value at the terminal end of the data stored in the buffer 401. VFOffset is indicative of a video final access offset value. AFOffset is indicative of an audio final access offset value. MAX(VFOffset, AFOffset) is indicative of a function for choosing a maximum value from between two values, i.e. VFOffset and AFOffset.

When the condition, Threshold > BLOffset - MAX(VFOffset, AFOffset), is satisfied (YES in step S61), the playback controller 306 stops playback until a predetermined amount of data is stored in the buffer 401 (step S62).

As has been described above, according to the present embodiment, when the playback position has been changed to the first data position of multimedia content data, which has not yet been stored in the buffer 401, the first buffering process is started for successively receiving from the content server 21 data parts which follow the first data position and storing the data parts in the buffer 401. After a predetermined amount of data has been stored in the buffer 401, if an audio data part, which is not stored in the buffer 401, has been requested, the second buffering process for receiving the requested audio data part from the content server 21 and storing the audio data part in the buffer 401 is skipped, the first buffering process is continued, and the playback of the requested audio data part by the playback module 307 is skipped. Thus, while multimedia content data which is not for streaming is being played back, if the playback position has been changed to the first data position of the multimedia content data, which has not yet been stored in the buffer 401, playback of video alone is executed during a predetermined starting time period, and no audio is played back. After the passage of the predetermined time period, both video and audio are played back. By skipping the buffering and playback of some audio data part in this manner, even if the multimedia content data is content data, in which the video data part and audio data part, which are mutually close to each other with respect to playback time, are not successive, this content data can smoothly be played back.

All the procedures of the playback control process according to this embodiment can be executed by software. Thus, the same advantageous effects as with the present embodiment can easily be obtained simply by installing a program, which executes the procedures of the playback control process, into an ordinary computer through a computer-readable storage medium which stores the program, and by executing the program.

## Claims

1. An electronic apparatus (10) which plays back multimedia content data in which video data and audio data are multiplexed, while receiving the multimedia content data from a server (21), **characterized by** comprising:
a buffer (401) configured to store the received data in the multimedia content data;
a playback module (307) configured to play back a video data part and an audio data part in data parts stored in the buffer (401); and
a control module (306) configured to start, when a playback position has been changed to a first data position in the multimedia content data, which has not yet been stored in the buffer (401), a first buffering process for successively receiving data parts, which follow the first data position in the multimedia content data, from the server (21), and storing the data parts in the buffer (401),
wherein the control module (306) is configured to skip, when an audio data part in the multimedia content data, which is not stored in the buffer (401), has been requested by the playback module (307) after a predetermined amount of data was stored in the buffer (401) by the first buffering process, execution of a second buffering process for receiving the requested audio data part from the server (21) and storing the audio data part in the buffer (401), to continue the first buffering process, and to cause the playback module (307) to skip playback of the audio data part requested by the playback module (307).

2. The electronic apparatus (10) of claim 1, **characterized in that** the control module (306) is configured to cause, when the playback position has been changed to the first data position in the multimedia content data, which has not yet been stored in the buffer (401), the playback module (307) to stop playback of the multimedia content data, and to cause the playback module (307) to play back the multimedia content data from the first data position after the predetermined amount of data has been stored in the buffer (401) by the first buffering process.

3. The electronic apparatus (10) of claim 1, **characterized in that** the control module (306) is further configured to store offset values in the multimedia content data, which are designated respectively by a video access request and an audio access request received from the playback module (307) during playback of the multimedia content data, as a video final access offset and an audio final access offset, and to release, when a difference between a minimum value chosen from between the video final access offset and the audio final access offset, on one hand, and an offset value indicative of a terminal end of data in the buffer (401), on the other hand, is less than a first threshold, a memory area in the buffer (401) which corresponds to a data range from a beginning end of data in the buffer (401) to the minimum value.

4. The electronic apparatus (10) of claim 1, **characterized in that** the control module (306) is further configured to store offset values in the multimedia content data, which are designated respectively by a video access request and an audio access request received from the playback module (307) during playback of the multimedia content data, as a video final access offset and an audio final access offset, and to display a buffered data section on a seek bar, based on a difference between a maximum value chosen from between the video final access offset and the audio final access offset, on one hand, and an offset value indicative of a terminal end of data in the buffer (401), on the other hand, and to cause the playback module (307) to stop playback of the multimedia content data when the difference between the maximum value and the offset value indicative of the terminal end of the data in the buffer (401) is less than a second threshold.

5. A playback control method of playing back multimedia content data in which video data and audio data are multiplexed, while receiving the multimedia content data from a server (21), **characterized by** comprising:
storing the received data in the multimedia content data in a buffer (401);
playing back a video data part and an audio data part in data parts stored in the buffer (401);
starting, when a playback position has been changed to a first data position in the multimedia content data, which has not yet been stored in the buffer (401), a first buffering process for successively receiving data parts which follow the first data position in the multimedia content data, from the server (21), and storing the data parts in the buffer (401); and
skipping, when playback of an audio data part in the multimedia content data, which is not stored in the buffer (401), has been requested after a predetermined amount of data was stored in the buffer (401) by the first buffering process, execution of a second buffering process for receiving the requested audio data part from the server (21) and storing the audio data part in the buffer (401), continuing the first buffering process, and skipping playback of the requested audio data part.

6. The playback control method of claim 5, **characterized by** further comprising:
stopping playback of the multimedia content data, when the playback position has been changed to the first data position in the multimedia content data, which has not yet been stored in the buffer (401); and
playing back the multimedia content data from the first data position after the predetermined amount of data has been stored in the buffer (401) by the first buffering process.

7. A program for causing a computer to play back multimedia content data **characterized in that** video data and audio data are multiplexed, while receiving the multimedia content data from a server (21), the program controlling the computer to execute functions of:
storing the received data in the multimedia content data in a buffer (401);
playing back a video data part and an audio data part in data parts stored in the buffer (401);
starting, when a playback position has been changed to a first data position in the multimedia content data, which has not yet been stored in the buffer (401), a first buffering process for successively receiving data parts, which follow the first data position in the multimedia content data, from the server (21), and storing the data parts in the buffer (401); and
skipping, when playback of an audio data part in the multimedia content data, which is not stored in the buffer (401), has been requested after a predetermined amount of data was stored in the buffer (401) by the first buffering process, execution of a second buffering process for receiving the requested audio data part from the server (21) and storing the audio data part in the buffer (401), continuing the first buffering process, and skipping playback of the requested audio data part.
